# EUROPÄISCHE PATENTANMELDUNG

(11) **EP 1 014 665 A2**
(43) Veröffentlichungstag der Anmeldung: **28.06.2000**
(21) Anmeldenummer: 99124333.8
(22) Anmeldetag: 06.12.1999
(51) Int. Cl.: H04M 3/54

(54) **Verfahren zum Realisieren einer Rufumlenkung aus dem Aktivstatus in einem Kommunikationsnetz nach dem Standard ITU-T H.323**

(30) Priorität: 21.12.1998 DE 19859151
(71) Anmelder: SIEMENS AKTIENGESELLSCHAFT, 80333 München (DE)
(72) Erfinder: Klaghofer, Karl, 81373 München (DE); Korpi, Markku, 82319 Starnberg (DE)

(57) **Zusammenfassung**

Es wird ein Verfahren zum Realisieren einer von einem ersten Endpunkt veranlaßten Rufumlenkung aus dem Aktivstatus - geöffnete logische Kanäle zwischen diesem ersten Endpunkt und einem zweiten Endpunkt - in einem Kommunikationsnetz nach dem Standard ITU-T H.323 beschrieben. Die Rufumlenkung erfolgt hierbei mit den folgenden Verfahrensschritten:
- Übermitteln einer Leistungsmerkmalmeldung für Rufumlenkung einschließlich einer Adresse des dritten Endpunktes an eine Proxy-Funktion;
- Übermitteln einer Verbindungsaufbaumeldung von der Proxy-Funktion zum dritten Endpunkt;
- Übermitteln einer Rufeinrichtungsmeldung vom dritten Endpunkt zur Proxy-Funktion;
- Auslösen der Verbindung zwischen dem ersten Endpunkt und dem zweiten Endpunkt; und
- Veranlassen eines Verbindungsaufbaus zwischen dem zweiten Endpunkt und dem dritten Endpunkt durch die Proxy-Funktion.

## Beschreibung

Die Erfindung betrifft ein Verfahren zur Rufumlenkung aus dem Aktivstatus in einem Kommunikationsnetz nach dem Standard ITU-T H.323. Eine solche Rufumlenkung ist beispielsweise im Kommunikationsnetz nach dem Standard ITU-T H.450.2 prinzipiell bekannt. Rufumlenkung aus den Aktivstatus bedeutet hierbei, daß bei einem zwischen einem ersten Endpunkt A und einem zweiten Endpunkt B in einem Kommunikationsnetz gemäß ITU-T H.323 bestehenden Ruf am Endpunkt A veranlaßt wird, daß zwischen dem Endpunkt B und einem Endpunkt C eine Verbindung aufgebaut wird und die Verbindung zwischen dem Endpunkt A und dem Endpunkt B ausgelöst wird. Bestehende Verbindung bedeutet in diesem Zusammenhang, daß zwischen den betreffenden Endpunkten logische Kanäle zur Nutzdatenübertragung geöffnet sind.

Eine solche Rufumlenkung aus dem Aktivstatus ist zwar aus Kommunikationsnetzen mit zentraler Rufsteuerung wie zum Beispiel privaten Nebenstellenanlagen oder ISDN-Netzen bekannt, läßt sich aber nicht in gleicher Weise in einem Kommunikationsnetz gemäß dem Standard ITU-T H.323, also einem Kommunikationsnetz ohne zentrale Rufsteuerung, realisieren.

Die vorliegende Erfindung betrifft ein Verfahren zum Realisieren eines von einem ersten Endpunkt A bei bestehender Verbindung zwischen diesem ersten Endpunkt A und einem zweiten Endpunkt B eines Kommunikationsnetzes gemäß dem Standard ITU-T H.323 veranlaßten Verbindungsaufbaus zwischen dem zweiten Endpunkt B und einem dritten Endpunkt C sowie des Abbaus der zwischen dem ersten Endpunkt A und dem zweiten Endpunkt B bestehenden Verbindung.

Diese Aufgabe löst die Erfindung durch ein Verfahren mit den folgenden Verfahrensschritten:
- Übermitteln einer Leistungsmerkmalmeldung für Rufumlenkung einschließlich einer Adresse des dritten Endpunktes an eine Proxy-Funktion;
- Übermitteln einer Verbindungsaufbaumeldung von der Proxy-Funktion zum dritten Endpunkt;
- Übermitteln einer Rufeinrichtungsmeldung vom dritten Endpunkt zur Proxy-Funktion;
- Auslösen der Verbindung zwischen dem ersten Endpunkt und dem zweiten Endpunkt; und
- Veranlassen eines Verbindungsaufbaus zwischen dem zweiten Endpunkt und dem dritten Endpunkt durch die Proxy-Funktion.

In einem solchen Verfahren müssen ein Gerät am ersten Endpunkt sowie die Proxy-Funktion eine Signalisierung zur Rufumlenkung, beispielsweise gemäß ITU-T H450.2, abarbeiten können. Am zweiten Endpunkt braucht eine solche Funktion nicht unterstützt zu werden. Vom ersten Endpunkt wird erfindungsgemäß eine Leistungsmerkmalmeldung für Rufumlenkung einschließlich einer Adresse des dritten Endpunktes und somit eine Anfrage für einen Verbindungsaufbau zwischen dem zweiten und dritten Endpunkt an die Proxy-Funktion übermittelt. Die Proxy-Funktion baut daraufhin eine Signalisierungsverbindung zu dem dritten Endpunkt auf und realisiert unter Einbeziehung der Proxy-Funktion eine Signalisierung zwischen dem zweiten und dritten Endpunkt. Außerdem veranlaßt die Proxy-Funktion eine Verbindung zwischen dem zweiten und dritten Endpunkt. Eine solche Verbindung über logische Kanäle kann abhängig von der Netzkonfiguration entweder unmittelbar zwischen dem zweiten und dritten Endpunkt aufgebaut werden oder unter Einbeziehung der Proxy-Funktion.

In einer vorteilhaften Realisierungsform erfolgt die Signalisierung zwischen Endpunkten über die Proxy-Funktion, die logischen Kanäle werden jedoch unmittelbar zwischen den Endpunkten geöffnet.

Das Schließen der logischen Kanäle zwischen dem ersten Endpunkt und dem zweiten Endpunkt kann erfindungsgemäß entweder durch die Proxy-Funktion oder vom ersten Endpunkt aus veranlaßt werden.

Falls, wie oben angedeutet, am zweiten Endpunkt keine Rufumlenkungssignalisierung nach ITU-T H.450 unterstützt wird, ist hierbei eine Unterstützung der Rufumlenkungssignalisierung im dritten Endpunkt erforderlich.

Nachstehend wird die Erfindung anhand eines Beispiels unter Bezugnahme auf die Figuren näher erläutert.
Figur 1 zeigt einen Meldungsflußplan zum Realisieren einer Rufumlenkung aus dem Aktivstatus in einem Kommunikationsnetz nach dem Standard ITU-T H.323 als ein Ausführungsbeispiel eines erfindungsgemäßen Verfahrens in schematischer Darstellung.
Figur 2 zeigt einen Teilausschnitt eines Kommunikationsnetzes nach dem Standard ITU-T H.323 mit Endpunkten, einer Gatekeeper-Funktion und einer Proxy-Funktion in schematischer Blockdarstellung.

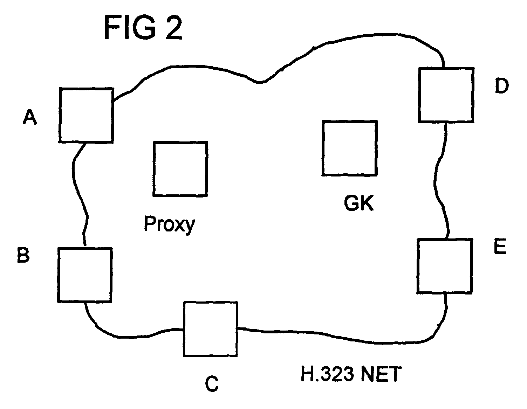

Kommunikationsnetze H.323 Net, wie in Figur 2 in groben Zügen dargestellt, sind prinzipiell bekannt. Das in Figur 2 gezeigte Kommunikationsnetz H.323 Net hat mehrere Endpunkte A, B, C, D und E und eine Gatekeeper-Funktion GK. Eine Proxy-Funktion PROXY ist, wie eine Gate-Keeper-Funktion GK, eine logische Funktion innerhalb eines Kommunikationsnetzes H.323 Net. Eine Gatekeeper-Funktion GK ist eine logische Funktion zum Erfüllen von Standardfunktionen wie Adreßauflösung oder Bandbreitenverwaltung. Adreßauflösung bedeutet hierbei, daß ein rufender Endpunkt D an den Gate-Keeper eine Alias-Adresse eines zu rufenden Endpunktes E sendet und vom Gate-Keeper GK die Transportadresse, also die Internetprotokolladresse und die Portnummer erhält. Der Gate-Keeper GK kennt das Verkehrsaufkommen bezüglich Echtzeitanwendungen innerhalb des Netzbereiches, für den er zuständig ist. Wenn ein rufender Endpunkt D eine Anfrage für eine Verbindung mit bestimmter Bandbreite zum Gate-Keeper GK sendet, vergleicht dieser die angefragte Bandbreite mit der verfügbaren Bandbreite und gibt abhängig von dem Vergleichsergebnis eine Meldung an den rufenden Endpunkt A.

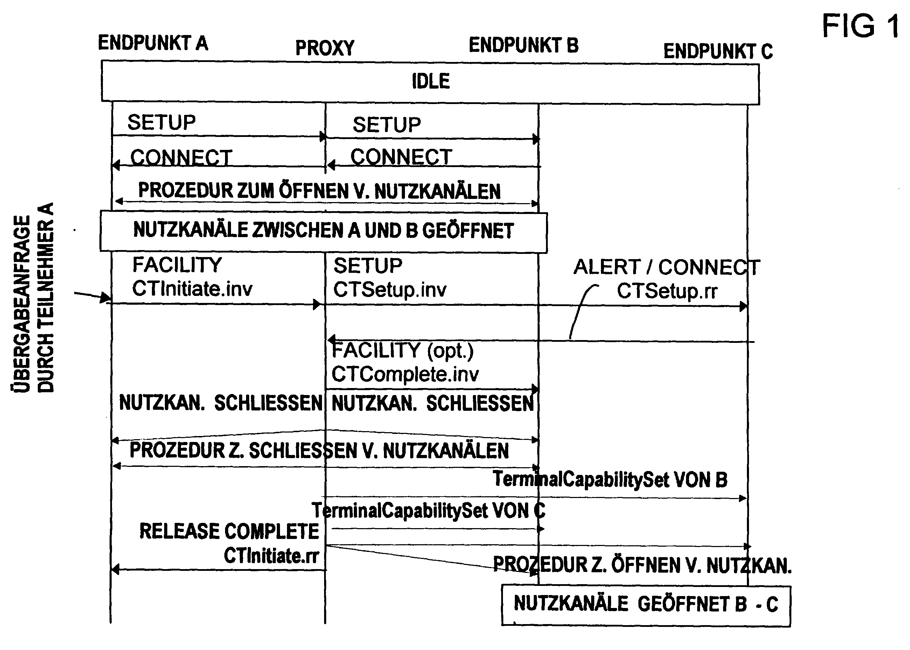

Von einem bekannten standardgemäßen H.323-Netz unterscheidet sich das in Figur 2 gezeigte durch eine spezielle Proxy-Funktion PROXY. Eine Ausführungsform einer solchen Proxy-Funktion PROXY wird anhand eines Ausführungsbeispiels eines erfindungsgemäßen Verfahrens unter Bezugnahme auf Figur 1 näher erläutert.

Figur 1 zeigt Grundzustände, Ereignisse und den Meldungsfluß zwischen drei Endpunkten A, B und C eines Kommunikationsnetzes nach dem Standard ITU-T H.323 und einer in diesem Kommunikationsnetz vorgesehenen Proxy-Funktion. Im Ausgangszustand befinden sich die Proxy-Funktion PROXY und den Endpunkten A, B und C zugeordnete (nicht dargestellte) Endgeräte jeweils in einem Ruhezustand "idle".

Ein Teilnehmer am Endpunkt A veranlaßt über die Proxy-Funktion PROXY einen Verbindungsaufbau zu einem Endpunkt B. Hierzu wird vom Endpunkt A eine Meldung SETUP, beispielsweise gemäß ITU-T H.225, an die Proxy-Funktion PROXY übermittelt und von der Proxy-Funktion PROXY zum Endpunkt B weitergeleitet.

Falls, wovon in dem dargestellten Ausführungsbeispiel ausgegangen wird, ein Teilnehmer oder eine automatisierte Einrichtung am Endpunkt B den vom Endpunkt A signalisierten Ruf entgegennehmen möchte, wird vom Endpunkt B eine Antwortmeldung CONNECT (gemäß ITU-T H.225) über die Proxy-Funktion PROXY zum Endpunkt A übermittelt. Daraufhin wird eine Prozedur zum Öffnen logischer Kanäle zwischen den Endpunkten A und B eingeleitet. Das Öffnen logischer Kanäle kann hierbei entweder bereits durch die SETUP-Meldung vorbereitet und mit der CONNECT-Meldung abgeschlossen werden oder durch die CONNECT-Meldung eingeleitet werden.

Die logischen Kanäle, also die Kanäle zur Übertragung von Nutzinformation, werden unmittelbar zwischen den Endpunkten A und B geöffnet wohingegen die Signalisierungsverbindungen jeweils zur Proxy-Funktion PROXY aufgebaut worden sind und Meldungen von dieser Proxy-Funktion PROXY an die eigentlichen Adressaten Endpunkt A bzw. Endpunkt B weitergeleitet werden.

Aus diesem Zustand beabsichtigt ein (nicht dargestellter) Teilnehmer am Endpunkt A, den zwischen den Endpunkten A und B eingerichteten Ruf an den Endpunkt C zu übergeben, also logische Kanäle zwischen den Endpunkten B und C einzurichten und zum Endpunkt A auszulösen.

Hierzu wird vom Endpunkt A eine Leistungsmerkmal-Meldung FACTLITY CTInitiate.invoke (CT steht für den englischsprachigen Ausdruck Call Transfer, also Rufumlenkung) gemäß ITU-T H.450.2 zum Veranlassen einer Rufumlenkung. Diese Meldung enthält die Adresse des Rufumlenkungsziels. Obwohl das Endgerät am Endpunkt A die Leistungsmerkmal-Meldung FACILITY CTInitiate.invoke gegebenenfalls an den Endpunkt B zu übermitteln versucht, erkennt die im Signalisierungspfad zwischengeschaltete Proxy-Funktion PROXY, daß diese Meldung nicht für den Endpunkt B bestimmt ist und fängt sie ab. Üblicherweise könnte das aufgerufene Leistungsmerkmal am Endpunkt B nicht ausgeführt werden. Die Proxy-Funktion ist demgegenüber zur Realisierung dieses Leistungsmerkmals vorgesehen.

Die Proxy-Funktion PROXY bearbeitet also die Leistungsmerkmal-Meldung FACILITY CTInitiate.invoke für den Endpunkt B und übermittelt eine SETUP-Meldung CTSetup.invoke zum Veranlassen eines Verbindungsaufbaus für eine Rufumlenkung an das Rufumlenkungsziel Endpunkt C. Vom Endpunkt C könnte daraufhin optional eine in der Figur nicht explizit dargestellte ALERT-Meldung zur Proxy-Funktion PROXY übermittelt werden, um das Abgeben eines Signals am Endpunkt C für einen kommenden Ruf anzuzeigen.

Falls ein (nicht dargestellter) Teilnehmer am Endpunkt C den angebotenen Ruf übernehmen möchte, veranlaßt er hierzu am Endpunkt C das Übermitteln einer Meldung CONNECT CTSetup.rr.

Optional kann daraufhin von der Proxy-Funktion PROXY über die bereits bestehende Signalisierungsverbindung zum Endpunkt B die Leistungsmerkmal-Meldung CTComplete.invoke mit Identifikations-Information des Rufumlenkungsziels Endpunkt C übermittelt werden.

Nach Empfang der CONNECT-Meldung vom Endpunkt C veranlaßt die Proxy-Funktion PROXY das Schließen der logischen Kanäle zwischen den Endpunkten A und B.

Zum Schließen und zum erneuten Öffnen logischer Kanäle kann die Steuerung beispielsweise gemäß dem Standard ITU-T H.323V2, Klausel 8.4.6 "Third Party Initiated Pause and Re-Routing" die Meldung "TerminalCapabilitySet = 0" verwenden. Mit der Meldung TerminalCapabilitySet teilt üblicherweise ein Endpunkt einem anderen Endpunkt mit, welche Kommunikationsmöglichkeiten er zur Verfügung hat. Die Grenzen dieser Möglichkeiten können hierbei sowohl technisch - aufgrund nicht vorhandener Hardware oder Software - oder durch festgelegte Berechtigungen bestimmt werden. Im vorliegenden Fall kann die Proxy-Funktion PROXY an den Endpunkt A eine TerminalCapabilitySet-Meldung senden, die besagt, daß der Endpunkt B keine Kommunikationsmöglichkeiten zur Verfügung hat. Zusätzlich kann die Proxy-Funktion PROXY an den Endpunkt B eine TerminalCapabilitySet-Meldung senden, die besagt, daß der Endpunkt A keine Kommunikationsmöglichkeiten zur Verfügung hat. Die beiden Endpunkte erkennen diese Meldungen jeweils als von dem anderen Endpunkt abgesandte Meldung. Da jeder der Endpunkte A und B davon unterrichtet worden ist, daß der Endpunkt, zu dem logische Kanäle geöffnet sind, keine Kommunikationsmöglichkelten zur Verfügung hat, werden diese logischen Kanäle abgebaut.

Die Proxy-Funktion PROXY übermittelt dem Endpunkt B eine TerminalCapabilitySet-Meldung mit den Daten des Endpunktes C. Außerdem übermittelt die Proxy-Funktion PROXY dem Endpunkt C eine TerminalCapabilitySet-Meldung mit den Daten des Endpunktes B, woraufhin eine Prozedur zum Öffnen logischer Kanäle zwischen den Endpunkten B und C mittels Meldungen gemäß ITU-T H.245 über die bestehende ITU-T H.245-Signalisierungsverbindung zwischen der Proxy-Funktion PROXY und den Endpunkten B und C ausgeführt wird.

Die Proxy-Funktion PROXY löst die bestehende ITU-T H.2250-Signalisierungsverbindung zu dem Endpunkt A durch eine Meldung RELEASE COMPLETE CTInitiate.rr aus.

Nun sind zwischen den Endpunkten B und C logische Kanäle geöffnet, um beispielsweise Audio- oder Video-Information zu übertragen. Außerdem bestehen Signalisierungsverbindungen zwischen der Proxy-Funktion PROXY und dem Endpunkt B sowie zwischen der Proxy-Funktion PROXY und dem Endpunkt C. Alle Verbindungen zum Endpunkt A sind abgebaut.

Wie in diesem Beispiel beschrieben wurde, verwendet die Proxy-Funktion PROXY Verfahrensmöglichkeiten eines Gatekeepers GK, um ein Leistungsmerkmal zu realisieren. Die beschriebene Realisierung des Leistungsmerkmals Rufumlenkung ist hierbei unabhängig davon, ob ein Gatekeeper GK zur Wegelenkung (Routing), beispielsweise durch Adreßumsetzung, verwendet wird.

## Patentansprüche

1. Verfahren zur Realisieren eines von einem ersten Endpunkt (A) bei bestehender Verbindung zwischen diesem ersten Endpunkt (A) und einem zweiten Endpunkt (B) eines Kommunikationsnetzes (H.323 Net) gemäß dem Standard ITU-T H.323 veranlaßten Verbindungsaufbaus zwischen dem zweiten Endpunkt (B) und einem dritten Endpunkt (C) sowie des Abbaus der zwischen dem ersten Endpunkt (A) und dem zweiten Endpunkt (B) bestehenden Verbindung, mit folgenden Verfahrensschritten:
- Übermitteln einer Leistungsmerkmalmeldung für Rufumlenkung einschließlich einer Adresse des dritten Endpunktes (C) an eine Proxy-Funktion (PROXY);
- Übermitteln einer Verbindungsaufbaumeldung von der Proxy-Funktion (PROXY)zum dritten Endpunkt (C);
- Übermitteln einer Rufeinrichtungsmeldung vom dritten Endpunkt (C) zur Proxy-Funktion (PROXY);
- Auslösen der Verbindung zwischen dem ersten Endpunkt (A) und dem zweiten Endpunkt (B); und
- Veranlassen eines Verbindungsaufbaus zwischen dem zweiten Endpunkt (B) und dem dritten Endpunkt (C) durch die Proxy-Funktion (PROXY).

2. Verfahren nach Anspruch 1,
dadurch gekennzeichnet,
daß das Auslösen der Verbindung zwischen dem ersten Endpunkt (A) und dem zweiten Endpunkt (B) von der Proxy-Funktion (PROXY) veranlaßt wird.
